# EUROPÄISCHE PATENTSCHRIFT

(11) **EP 3 430 252 B1**
(45) Veröffentlichungstag und Bekanntmachung des Hinweises auf die Patenterteilung: **11.01.2023**
(21) Anmeldenummer: 17703149.9
(22) Anmeldetag: 06.02.2017
(51) Int. Cl.: F02D 41/14, F02D 41/00, F02D 35/02

(54) **VERFAHREN UND STEUERVORRICHTUNG ZUM BESTIMMEN EINER MENGE EINER FÜLLUNGSKOMPONENTE IN EINEM ZYLINDER EINER VERBRENNUNGSKRAFTMASCHINE**
METHOD AND CONTROLLER FOR DETERMINING THE QUANTITY OF FILLING COMPONENTS IN A CYLINDER OF AN INTERNAL COMBUSTION ENGINE
PROCÉDÉ ET DISPOSITIF DE COMMANDE POUR LA DÉTERMINATION D'UNE QUANTITÉ D'UN COMPOSANT DE REMPLISSAGE DANS UN CYLINDRE D'UN MOTEUR À COMBUSTION INTERNE

(30) Priorität: 18.03.2016 DE 102016204539
(43) Veröffentlichungstag der Anmeldung: 23.01.2019
(73) Patentinhaber: Volkswagen Aktiengesellschaft, 38440 Wolfsburg (DE)
(72) Erfinder: MILLICH, Elmar, 10999 Berlin (DE); PETERSEN, Lars, 38536 Meinersen (DE); KLEINHANS, René, 29399 Warenholz (DE); SHURKEWITSCH, Andre, 38547 Calberlah (DE); TEMPEL, Jean-Sebastian, 38106 Braunschweig (DE)
(74) Vertreter: MFG Patentanwälte Meyer-Wildhagen Meggle-Freund Gerhard PartG mbB
(86) Internationale Anmeldenummer: PCT/EP2017/052494
(87) Internationale Veröffentlichungsnummer: WO 2017/157580

(56) Entgegenhaltungen:
- DE-A1- 10 213 138
- US-A1- 2003 105 575
- US-A1- 2014 007 855
- US-A1- 2014 230 780

## Beschreibung

Die Erfindung betrifft ein Verfahren und eine Steuervorrichtung zum Bestimmen einer Menge einer Füllungskomponente in einem Zylinder einer Verbrennungskraftmaschine, insbesondere zum Bestimmen einer Restgasmenge in einem Zylinder einer Verbrennungskraftmaschine eines Kraftfahrzeugs. Weiterhin betrifft die Erfindung ein Kraftfahrzeug mit einer solchen Steuervorrichtung.

Beim Betrieb von Ottomotoren spielt eine möglichst genaue Erfassung der aktuellen Zylinderluftfüllung eine zentrale Rolle, um die Kraftstoffmasse per Einspritzung möglichst exakt im stöchiometrischen Verhältnis abzusetzen, dass ein Lambdawert den Wert eins annimmt, und somit die Schadstoffemissionen zu minimieren. Bei Dieselmotoren ist eine genaue Bestimmung der Zylinderfüllung aufgrund der Abgasgesetzgebung ebenso von zunehmender Bedeutung. Im Motorsteuergerät wird daher die Zylinderluftfüllung in der Regel aus einem gemessenen oder modellierten Saugrohrdruck, einem gemessenen oder modellierten Abgasgegendruck und Modellen für den Restgasanteil im Zylinder berechnet. Des Weiteren gehen in die Berechnung der Zylinderluftfüllung die aktuellen Positionen füllungsbeeinflussender Aktuatoren, beispielsweise die Positionen der Einlass- und Auslassnockenwellen, der Ladungsbewegungsklappen, der Ventilhübe und andere Positionen, sowie Ansaugluft- und Abgastemperaturen ein. Ein weiterer wichtiger Parameter in der Berechnung der aktuellen Zylinderfüllung ist der Abgasgegendruck direkt nach den Auslassventilen, da dieser einen maßgeblichen Einfluss auf die Restgasrate im Brennraum hat. Dabei wird bei sensorbasierten Verfahren typischerweise der über ein Arbeitsspielsegment gemittelte Abgasgegendruck betrachtet.

Wird ein aufgeladener Ottomotor in Betriebspunkten mit Nockenwellenüberschneidung betrieben, so ist der Abgasgegendruck starken kurbelwinkelabhängigen Schwankungen unterworfen. Insbesondere bei niedrigen bis mittleren Drehzahlen kann die Verwendung des gemittelten Abgasgegendrucks zu fehlerhaften Berechnungen der Zylinderluftfüllung führen. Parametrisierte Modelle für den Zusammenhang zwischen Zylinderluftfüllung und gemittelten Abgasgegendruck zeigen in einigen Betriebsbereichen ein extrem nichtlineares Verhalten, welches vor allem auch in Hinblick auf Sensortoleranzen zu erheblichen Ungenauigkeiten führen kann.

Die DE 10 2006 032 366 A1 beschreibt ein Verfahren zum Bestimmen einer Frischluftmasse in einem Zylinder auf Grundlage einer Abgasmenge, wobei die Abgasmenge aus einem Verhältnis eines Abgasdrucks vor und nach einer Blende, die in einem Abgaskanal hinter einem Auslassventil des Zylinders angeordnet ist, bestimmt wird. Aus der Abgasmenge wird dann die Frischluftmasse bestimmt. Die Genauigkeit der Bestimmung der Frischluftmasse kann in Betriebspunkten mit Nockenwellenüberschneidung wiederum beeinträchtigt sein. US 2003/105575 A1, US 2014/230780 A1 und DE 102 13 138 A1 offenbaren ebenfalls eine Bestimmung der Restgasmenge mittels Abgasgegendrucksensor.

Aufgabe der vorliegenden Erfindung ist es, ein Verfahren und eine Steuervorrichtung zum Bestimmen einer Menge einer Restgasmenge in einem Zylinder einer Verbrennungskraftmaschine bereitzustellen, die die oben genannten Nachteile wenigstens teilweise überwinden.

Diese Aufgabe wird durch das erfindungsgemäße Verfahren zum Bestimmen einer Menge einer Restgasmenge in einem Zylinder nach Anspruch 1 und die erfindungsgemäße Steuervorrichtung zum Bestimmen einer Menge einer Füllungskomponente in einem Zylinder nach Anspruch 4 gelöst.

Gemäß einem ersten Aspekt betrifft die Erfindung ein Verfahren zum Bestimmen einer Menge einer Restgasmenge in einem Zylinder einer Verbrennungskraftmaschine, wobei der Zylinder über ein Einlassventil mit einer Luftzuführung und über ein Auslassventil mit einer Abgasführung verbunden ist, umfassend:
Erhalten eines Abgasgegendrucks zu einem vorgegebenen Zeitpunkt während eines Arbeitsspiels der Verbrennungskraftmaschine, zu dem das Auslassventil geöffnet ist; und Berechnen der Menge der Restgasmenge zu dem vorgegebenen Zeitpunkt auf Grundlage des erhaltenen Abgasgegendrucks.

Gemäß einem zweiten Aspekt betrifft die Erfindung eine Steuervorrichtung zum Bestimmen einer Menge einer Restgasmenge in einem Zylinder einer Verbrennungskraftmaschine, wobei die Steuervorrichtung dazu ausgelegt ist, ein Verfahren zum Bestimmen einer Menge einer Restgasmenge in einem Zylinder nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Bestimmen einer Restgasmenge, in einem Zylinder einer Verbrennungskraftmaschine, insbesondere einer Verbrennungskraftmaschine eines Kraftfahrzeugs mit den Merkmalen des Verfahrens gemäß Anspruch 1 sowie der Steuervorrichtung gemäß Anspruch 4.

Die Verbrennungskraftmaschine ist derart ausgebildet, dass der Zylinder über ein Einlassventil mit einer Luftzuführung, insbesondere einem Saugrohr, und über ein Auslassventil mit einer Abgasführung, insbesondere einem Abgaskrümmer, verbunden ist. Die Verbrennungskraftmaschine kann ein Ottomotor oder ein Dieselmotor sein.

Gemäß dem Verfahren wird ein Abgasgegendruck zu einem vorgegebenen Zeitpunkt während eines Arbeitsspiels der Verbrennungskraftmaschine, zu dem das Einlassventil und das Auslassventil teilweise geöffnet sind, empfangen und auf Grundlage des erhaltenen Abgasgegendrucks die Restgasmenge zu dem vorgegebenen Zeitpunkt berechnet. Der Abgasgegendruck zu dem vorgegebenen Zeitpunkt wird in der Abgasführung benachbart zu dem Auslassventil von einem hochauflösenden Abgasgegendrucksensor gemesser, wobei die Abtastrate zwischen 0,5kHz bis 3000kHz liegt.

Mit dem beschriebenen Verfahren lässt sich die Restgasmenge und damit die Zylinderfüllung insgesamt sehr exakt bestimmen.

Das Arbeitsspiel (auch als Arbeitszyklus bezeichnet) kann die Schritte Ansaugen, Verdichten, Arbeiten, Ausstoßen umfassen. Ein Arbeitsspiel der Verbrennungskraftmaschine erstreckt sich bei einem Viertaktmotor beispielsweise über zwei Kurbelwellenumdrehungen.

In manchen Ausführungsbeispielen kann der vorgegebene Zeitpunkt während des Arbeitsspiels der Verbrennungskraftmaschine ein Zeitpunkt sein, zu dem das Einlassventil geöffnet ist. Der vorgegebene Zeitpunkt ist ein Zeitpunkt während einer Ventilüberschneidung (auch als Nockenwellenüberschneidung bezeichnet) sein. Während der Ventilüberschneidung ist sowohl das Einlassventil als auch das Auslassventil geöffnet. Eine Ventilüberschneidung kann beispielsweise während des Ausstoßens und/oder des Ansaugens vorgesehen sein.

Zu dem vorgegebenen Zeitpunkt, zu dem das Einlassventil geöffnet ist, ist das Einlassventil teilweise geöffnet.

Vorzugsweise kann ein Ventilhub des Einlassventils zu dem vorgegebenen Zeitpunkt 0,1mm oder mehr betragen, insbesondere im Bereich von 0,2mm bis 0,5mm liegen oder größer sein.

Der vorgegebene Zeitpunkt kann beispielsweise der Zeitpunkt sein, zu dem der Ventilhub des Einlassventils zwischen 0,2mm und 0,5mm liegt und das Auslassventil teilweise geöffnet ist. Alternativ kann das Einlassventil teilweise geöffnet sein und ein Ventilhub des Auslassventils zwischen 0,2mm und 0,5mm liegen. Weiter alternativ kann der vorgegebene Zeitpunkt zwischen einem Zeitpunkt, zu dem das Einlassventil öffnet, und einem Zeitpunkt, zu dem das Auslassventil schließt, liegen, insbesondere mittig zwischen diesen beiden Zeitpunkten liegen.

Der Abgasgegendruck zu dem vorgegebenen Zeitpunkt kann gemessen sein oder auf Grundlage von Messdaten berechnet sein. Die Messdaten können zu verschiedenen Zeitpunkten während des einen Arbeitsspiels gemessen sein, zu denen sowohl das Einlassventil als auch das Auslassventil teilweise geöffnet sind, und der Abgasgegendruck kann beispielsweise durch Bildung eines Mittelwerts berechnet sein.

Da der Abgasgegendruck während der Ventilüberschneidung entscheidend ist für die Zylinderluftfüllung des Zylinders sowie die Restgasmenge und nicht die gemittelten Druckverläufe, ermöglicht das beschriebene Verfahren eine sehr exakte Berechnung der Zylinderluftfüllung bei Betriebspunkten mit hoher NockenwellenÜberschneidung und bei hohen Abgasgegendrücken. Aber auch für andere Betriebspunkte, die eine geringere oder, nicht erfindungsgemäß, keine Nockenwellenüberschneidung zeigen, ist eine sehr exakte Berechnung der Zylinderluftfüllung sowie der Restgasmasse möglich.

Die Menge der Füllungskomponente umfasst erfindungsgemäß eine Restgasmenge, insbesondere eine Restgasmasse, nicht erfindungsgemäß eine Frischluftmenge, insbesondere eine Frischluftmasse, und/oder nicht erfindungsgemäß eine Spülluftmenge, insbesondere eine Spülluftmasse.

Die Restgasmenge ist vorzugsweise eine Menge an Abgas, die während des Ausstoßens in dem Zylinder verbleibt. Die Frischluftmenge ist vorzugsweise eine Menge an Frischluft, die während des Ansaugens in den Zylinder gelangt und in diesem verbleibt. Die Spülluftmenge ist vorzugsweise eine Menge an Frischluft, die während des Ansaugens während der Ventilüberschneidung in den Zylinder gelangt und diesen über das Auslassventil wieder verlässt.

Da der Abgasgegendruck während der Ventilüberschneidung insbesondere das Ausmaß einer Restgasüberströmung oder Restgasausspülung beeinflusst, kann mit dem beschriebenen Verfahren die Restgasmenge, insbesondere die Restgasmasse, besonders genau festgestellt werden.

In manchen Ausführungsbeispielen kann zwischen dem Abgasgegendruck zu dem vorgegebenen Zeitpunkt und der Restgasmenge ein vorgegebener Zusammenhang bestehen. Dieser kann über einen vorgegebenen Abgasgegendruckbereich im Wesentlichen konstant oder zumindest eindeutig definiert sein.

Die Ausnutzung des Zusammenhangs zwischen der Restgasmenge, und dem Abgasgegendruck zu dem vorgegebenen Zeitpunkt, zu dem das Auslassventil und das Einlassventil teilweise geöffnet sind, macht das beschriebene Verfahren robust gegen systematische und stochastische Fehler in einer Messwerterfassung eines Abgasgegendrucksensors. Der feste vorgegebene Zusammenhang zwischen der Restgasmenge, und dem Abgasgegendruck zu dem Zeitpunkt, zu dem das Auslassventil und das Einlassventil teilweise geöffnet sind, reduziert zudem bei der Berechnung der Luftmasse in einem Motorsteuergerät Rechenaufwand und Speicherbedarf.

Beim Bestimmen der Restgasmenge kann weiterhin ein Saugrohrdruck berücksichtigt werden. Der Saugrohrdruck kann in der Luftzuführung, vorzugsweise benachbart zu dem Einlassventil, von einem Drucksensor gemessen sein. Beispielsweise kann ein Verhältnis zwischen dem Saugrohrdruck und dem Abgasgegendruck zu dem vorgegebenen Zeitpunkt, insbesondere während der Ventilüberschneidung, bestimmt werden. Auf Grundlage dieses Verhältnisses zwischen dem Saugrohrdruck und dem Abgasgegendruck kann dann die Menge der Restgasmenge berechnet werden.

Da das Verhältnis zwischen dem Saugrohrdruck und dem Abgasgegendruck während der Ventilüberschneidung entscheidend ist für das Ausmaß der Restgasüberströmung oder Restgasausspülung, kann die Restgasmenge mit dem erfindungsgemäßen Verfahren sehr genau bestimmt werden.

In manchen Ausführungsbeispielen kann die Restgasmenge zusätzlich zu dem Abgasgegendruck und gegebenenfalls dem Saugrohrdruck ferner von einem oder mehreren Zustandsparametern der Verbrennungskraftmaschine abhängig sein. Die Zustandsparameter können eine Drehzahl der Verbrennungskraftmaschine, eine Position eines oder mehrerer Ventiltriebsteller, beispielsweise eine Einlassnockenwellenphase, eine Auslassnockenwellenphase oder eine andere Position, und/oder eine oder mehrere Temperaturen, beispielsweise eine Ansauglufttemperatur, eine Motortemperatur oder eine Abgastemperatur, umfassen. Durch die Berücksichtigung des einen oder mehrerer Zustandsparameter lässt sich die Genauigkeit der Bestimmung der Menge der Füllungskomponente weiter verbessern.

In manchen Ausführungsbeispielen kann die Menge der Füllungskomponente von einem oder mehreren Konstruktionsparametern der Verbrennungskraftmaschine, zu Beispiel von einem Volumen des Zylinders der Verbrennungskraftmaschine, abhängig sein. Dadurch lässt sich die Genauigkeit der Bestimmung der Menge der Füllungskomponente weiter verbessern.

Erfindungsgemäß umfasst das erfindungsgemäße Verfahren weiterhin das Empfangen eines Sensorsignals mit einer hohen zeitlichen Abtastrate von einem hochauflösenden Abgasgegendrucksensor, wobei das Sensorsignal den Abgasgegendruck repräsentiert. Die Abtastrate liegt im Bereich von 0,5 kHz bis 3000 kHz, insbesondere im Bereich von 1 kHz bis 1000 kHz. Der Abgasgegendruck zu dem vorgegebenen Zeitpunkt wird dann aus dem Sensorsignal extrahiert.

Durch die Verwendung des Abgasgegendrucksensors in Verbindung mit einer hohen zeitlichen Abtastrate des Sensors wird der momentane Abgasgegendruck zu verschiedenen Zeitpunkten während eines Arbeitsspiels erfasst. Auf diese Weise wird der Abgasgegendruck zu dem Zeitpunkt, zu dem das Auslassventil und das Einlassventil teilweise geöffnet sind, bestimmt. Mithilfe dieses Messwertes kann bei Kenntnis des entsprechenden Zylindervolumens und der Abgastemperatur die Restgasmenge errechnet werden.

Das oben beschriebene Verfahren ermöglicht eine sehr exakte Bestimmung der

Zylinderluftfüllung bzw. der Menge der Füllungskomponente, die erfindungsgemäß die Restgasmenge ist, insbesondere bei Betriebspunkten mit hoher Nockenwellenüberschneidung und bei hohen Abgasgegendrücken. Die Ausnutzung des vorgegebenen Zusammenhangs zwischen der Menge der Füllungskomponente, beispielsweise einer Zylinderluftmasse, und dem Abgasgegendruck zu dem vorgegebenen Zeitpunkt, insbesondere zu dem Zeitpunkt, zu dem das Einlassventil sowie das Auslassventil teilweise geöffnet sind, macht dieses Verfahren zudem robust gegen systematische und stochastische Fehler in der

Messwerterfassung des Abgasgegendrucksensors. Der feste vorgegebene Zusammenhang zwischen Zylinderluftmasse und Abgasgegendruck zu dem vorgegebenen Zeitpunkt reduziert zudem bei der Berechnung der Zylinderluftmasse im Motorsteuergerät Rechenaufwand und Speicherbedarf.

Die vorliegende Erfindung betrifft weiterhin eine Steuervorrichtung zum Bestimmen einer Menge einer Füllungskomponente in einem Zylinder einer Verbrennungskraftmaschine, wobei der Zylinder über ein Einlassventil mit einer Luftzuführung und über ein Auslassventil mit einer Abgasführung verbunden ist, mit den Merkmalen des Anspruchs 4. Die Steuervorrichtung ist dazu ausgelegt, einen Abgasgegendruck zu einem vorgegebenen Zeitpunkt während eines Arbeitsspiels der Verbrennungskraftmaschine, zu dem das Einlassventil und das Auslassventil teilweise geöffnet sind, zu empfangen und auf Grundlage des erhaltenen Abgasgegendrucks die Restgasmenge zu dem vorgegebenen Zeitpunkt zu berechnen. Die Steuervorrichtung ist insbesondere dazu ausgelegt, ein Verfahren zum Bestimmen einer Menge einer Füllungskomponente, die erfindungsgemäß eine Restgasmenge ist, in einem Zylinder, wie es voranstehend beschrieben ist, auszuführen.

Die Steuervorrichtung kann einen Prozessor, beispielsweise einen Mikroprozessor, aufweisen, der dazu ausgebildet ist, das beschriebene Verfahren zum Bestimmen einer Menge einer Füllungskomponente in einem Zylinder auszuführen. Die Steuervorrichtung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem der vorgegebene Zusammenhang und/oder vorgegebene Parameter zum Durchführen des beschriebenen Verfahrens, beispielsweise das Zylindervolumen, hinterlegt sein.

Die Steuervorrichtung kann eine Reihe von Signaleingängen und Signalausgängen aufweisen. Über die Signaleingänge können beispielsweise der Abgasgegendruck, der Saugrohrdruck, die Zustandsparameter der Verbrennungskraftmaschine und/oder andere Signale empfangen werden. Über die Signalausgänge kann insbesondere die Menge der Füllungskomponente ausgegeben werden.

Die Steuervorrichtung kann in eine Motorsteuerung des Kraftfahrzeugs integriert sein. Alternativ kann die Steuervorrichtung als eine separate Einheit ausgebildet sein.

In manchen Ausführungsbeispielen kann die Steuervorrichtung einen Abgasgegendrucksensor umfassen oder mit einem Abgasgegendrucksensor, beispielsweise über einen der Signaleingänge, verbindbar sein. Der Abgasgegendrucksensor ist dabei dazu ausgebildet, ein Sensorsignal mit einer hohen zeitlichen Abtastrate, das den Abgasgegenruck repräsentiert, auszugeben. Die Steuervorrichtung wiederum ist dazu ausgelegt, den Abgasgegendruck zu dem vorgegebenen Zeitpunkt aus dem Sensorsignal zu extrahieren.

Die vorliegende Erfindung betrifft weiterhin ein Kraftfahrzeug mit einer Verbrennungskraftmaschine und einer Steuervorrichtung zum Bestimmen einer Menge einer Füllungskomponente in einem Zylinder der Verbrennungskraftmaschine, wie sie voranstehend beschrieben wurde. Die Verbrennungskraftmaschine weist einen Zylinder, ein Einlassventil, über das der Zylinder mit einer Luftzuführung verbunden ist, und ein Auslassventil, über das der Zylinder mit einer Abgasführung verbunden ist, auf. Die Verbrennungskraftmaschine kann ein Ottomotor sein, der vorzugsweise so gesteuert ist, dass eine Ventilüberschneidung, insbesondere eine hohe Ventilüberschneidung, auftritt. Die Verbrennungskraftmaschine kann ein Dieselmotor sein, der vorzugsweise mit einer erweiterten Variabilität im Ventiltrieb betreibbar ist und/oder eine interne Abgasrückführung nutzt.

Ausführungsbeispiele der Erfindung werden nun beispielhaft und unter Bezugnahme auf die beigefügten Zeichnungen beschrieben. Es zeigen:
- Fig. 1: schematisch ein Ausführungsbeispiel einer Verbrennungskraftmaschine;
- Fig. 2: einen Ausschnitt eines Arbeitszyklus der Verbrennungskraftmaschine; und
- Fig. 3: ein Flussdiagramm eines erfindungsgemäßen Verfahrens zum Bestimmen einer Menge einer Füllungskomponente in einem Zylinder der Verbrennungskraftmaschine aus Fig. 1.

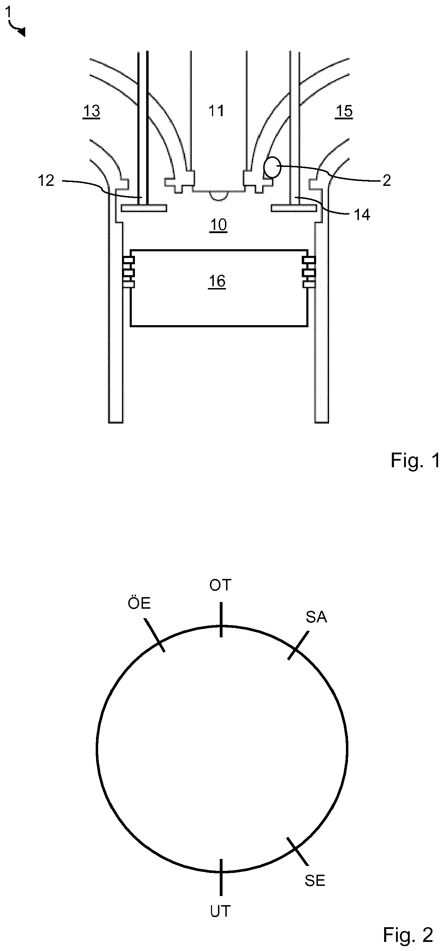

Ein Ausführungsbeispiel eines Zylinders 1 einer Verbrennungskraftmaschine ist in Fig. 1 schematisch dargestellt. Der Zylinder 1 hat einen Brennraum 10, in dem die Verbrennung von Kraftstoff stattfindet, der über ein Einspritzventil 11eingespritzt wird. Der Zylinder 1 ist über ein Einlassventil 12 mit einem Saugrohr 13 gekoppelt, aus dem durch das Einlassventil 12 Frischluft in den Brennraum 10 gelangt. Außerdem ist der Zylinder 1 über ein Auslassventil 14 mit einem Abgaskrümmer 15 gekoppelt ist, durch das Abgas bzw. Restgas aus dem Brennraum 10 in den Abgaskrümmer 15 geleitet wird. Ferner ist ein Zylinderkolben 16 vorhanden, der von einer Kurbelwelle (nicht dargestellt) angetrieben wird. In dem Abgaskrümmer 15 direkt hinter dem Auslassventil 14 ist ein Abgasgegendrucksensor 2 angeordnet, der dazu ausgebildet ist, einen Abgasgegendruck mit hoher zeitlicher Abtastrate zu detektieren.

In der Fig. 1 ist der Zylinder 1 zu einem Zeitpunkt, in dem das Einlassventil 12 und das Auslassventil 14 geöffnet sind und eine Ventilüberschneidung vorliegt, dargestellt.

Fig. 2 zeigt einen Ausschnitt eines Arbeitszyklus der Verbrennungskraftmaschine, der einen Öffnungszeitpunkt ÖE und einen Schließzeitpunkt SE des Einlassventils 12 und einen Schließzeitpunkt SA des Auslassventils 14 während des Ansaugens verdeutlicht. Der Arbeitszyklus der Verbrennungskraftmaschine umfasst das Ansaugen von Frischluft in den Zylinder, das Verdichten der Zylinderfüllung in dem Zylinder, das Arbeiten bzw. das Verbrennen von Kraftstoff und das Ausstoßen des Abgases bzw. Restgases aus dem Zylinder.

In Fig. 2 ist ein Kreissektor gezeigt, auf dem ein oberer Totpunkt OT, an dem sich der Kolben 16 der Verbrennungskraftmaschine in einer Position befindet, in der das Zylindervolumen minimal ist, und ein unterer Totpunkt UT, an dem sich der Kolben der Verbrennungskraftmaschine in einer Position befindet, in der das Zylindervolumen maximal ist, angedeutet ist.

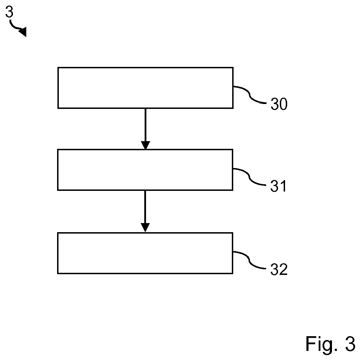

In einem Bereich zwischen dem oberen Totpunkt OT und dem unteren Totpunkt UT entlang der rechten Kreishälfte erfolgt das Ansaugen. Wie in Fig. 2 links vom oberen Totpunkt OT gezeigt, wird das Einlassventil der Verbrennungskraftmaschine zu einem Öffnungszeitpunkt ÖE geöffnet, bevor der Kolben den oberen Totpunkt erreicht. Kurz nachdem der Kolben 16 den oberen Totpunkt OT durchlaufen hat, liegt ein Schließzeitpunkt SA des Auslassventils 14. Kurz bevor der Kolben den unteren Totpunkt UT erreicht, schließt auch das Einlassventil 12, was als Schließzeitpunkt SE in Fig. 3 gezeigt ist.

Der Abgasgegendrucksensor 2 ist mit einer Motorsteuerung (nicht dargestellt) verbunden, die dazu ausgebildet ist, ein Verfahren zum Bestimmen einer Restgasmasse in dem Zylinder, wie es mit Bezug auf Fig. 3 weiter unten beschrieben wird, auszuführen. Auf Grundlage der bestimmten Restgasmasse kann die Motorsteuerung dann das Einspritzventil 11 steuern.

Fig. 3 zeigt ein Flussdiagramm eines Verfahrens zum Bestimmen einer Restgasmasse in dem Zylinder 1 aus Fig. 1.

Bei 30 wird von dem hochauflösenden Abgasgegendrucksensor ein Sensorsignal empfangen, das den Abgasgegendruck repräsentiert. Der Abgasgegendrucksensor ist dazu ausgebildet, den Abgasgegendruck mit einer hohen zeitlichen Abtastrate zu messen. Das Sensorsignal stellt somit für eine Vielzahl an Zeitpunkten des Arbeitszyklus der Verbrennungskraftmaschine Werte für den Abgasgegendruck zur Verfügung.

Bei 31 wird zu einem vorgegebenen Zeitpunkt während eines Arbeitsspiels der Verbrennungskraftmaschine im Bereich von dem Öffnungszeitpunkt des Einlassventils bis zu dem Schließzeitpunkt des Auslassventils aus dem Sensorsignal ein Abgasgegendruck extrahiert. Der vorgegebene Zeitpunkt ist ein Zeitpunkt, zu dem das Einlassventil und das Auslassventil zumindest teilweise geöffnet sind.

Bei 32 wird auf Grundlage des erhaltenen Abgasgegendrucks zu dem vorgegebenen Zeitpunkt eine Restgasmasse berechnet. Die Berechnung erfolgt mit Hilfe eines festen vorgegebenen Zusammenhangs zwischen der Restgasmasse und dem Abgasgegendruck zu dem vorgegebenen Zeitpunkt. Damit lässt sich insgesamt die Zylinderfüllung sehr exakt bestimmen.

### Bezugszeichenliste

- 1: Zylinder einer Verbrennungskraftmaschine
- 10: Brennraum
- 11: Einspritzventil
- 12: Einlassventil
- 13: Saugrohr
- 14: Auslassventil
- 15: Abgaskrümmer
- 16: Zylinderkolben
- 2: Abgasgegendrucksensor
- 3: Verfahren zum Bestimmen einer Restgasmasse in dem Zylinder
- 30: Empfangen eines Sensorsignals von dem Abgasgegendrucksensor
- 31: Erhalten eines Abgasgegendrucks zu dem vorgegebenen Zeitpunkt
- 32: Berechnen der Restgasmasse aus dem Abgasgegendruck

- OT: oberer Totpunkt
- UT: unterer Totpunkt
- ÖE: Öffnungszeitpunkt des Einlassventils
- SE: Schließzeitpunkt des Einlassventils
- SA: Schließzeitpunkt des Auslassventils

## Patentansprüche

1. Verfahren zum Bestimmen einer Restgasmenge in einem Zylinder (1) einer Verbrennungskraftmaschine, wobei der Zylinder (1) über ein Einlassventil (12) mit einer Luftzuführung (13) und über ein Auslassventil (14) mit einer Abgasführung (15) verbunden ist, umfassend:
Erhalten (31) eines Abgasgegendrucks zu einem vorgegebenen Zeitpunkt während eines Arbeitsspiels der Verbrennungskraftmaschine, zu dem das Einlassventil (12) teilweise geöffnet ist und das Auslassventil (14) teilweise geöffnet ist, wobei ein Sensorsignal mit einer hohen zeitlichen Abtastrate, das den Abgasgegendruck repräsentiert, von einem hochauflösenden Abgasgegendrucksensor (2), der in der Abgasführung benachbart zum Auslassventil angeordnet ist, empfangen wird, wobei die Abtastrate im Bereich von mit 0,5 kHz bis 3000kHz liegt, und der Abgasgegendruck zu dem vorgegebenen Zeitpunkt aus dem Sensorsignal extrahiert wird; und
Berechnen (32) der Restgasmenge zu dem vorgegebenen Zeitpunkt in Abhängigkeit des erhaltenen Abgasgegendrucks.

2. Verfahren nach dem vorhergehenden Anspruch, wobei die Restgasmenge ferner von einem Zustandsparameter der Verbrennungskraftmaschine abhängig ist.

3. Verfahren nach einem der vorhergehenden Ansprüche, wobei die Restgasmenge ferner von einem Konstruktionsparameter der Verbrennungskraftmaschine abhängig ist.

4. Steuervorrichtung zum Bestimmen einer Restgasmenge in einem Zylinder (1) einer Verbrennungskraftmaschine, wobei die Steuervorrichtung einen Abgasgegendrucksensor (2) umfasst oder mit einem Abgasgegendrucksensor (2) verbindbar ist, der dazu ausgebildet ist, ein Sensorsignal mit einer hohen zeitlichen Abtastrate auszugeben, das den Abgasgegenruck repräsentiert, und der in der Abgasführung benachbart zum Auslassventil angeordnet ist, wobei die Abtastrate im Bereich von mit 0,5 kHz bis 3000kHz liegt, und wobei die Steuervorrichtung dazu ausgelegt ist, ein Verfahren zum Bestimmen einer Restgasmenge in einem Zylinder (1) nach einem der vorhergehenden Ansprüche auszuführen.

5. Kraftfahrzeug mit einer Verbrennungskraftmaschine, die einen Zylinder (1), ein Einlassventil (12), über das der Zylinder (1) mit einer Luftzuführung (13) verbunden ist, und ein Auslassventil (14), über das der Zylinder (1) mit einer Abgasführung verbunden ist, umfasst, und mit einer Steuervorrichtung (2) zum Bestimmen einer Restgasmenge in dem Zylinder (1) der Verbrennungskraftmaschine nach dem vorhergehenden Anspruch.

## Claims

1. A method for determining a residual gas quantity in a cylinder (1) of an internal combustion engine, wherein the cylinder (1) is connected via an inlet valve (12) to an air supply (13) and via an outlet valve (14) to an exhaust gas discharge (15), comprising:
obtaining (31) an exhaust gas back pressure at a predetermined time during a working cycle of the internal combustion engine, at which the inlet valve (12) is partially open and the outlet valve (14) is partially open, wherein a sensor signal with a high temporal sampling rate and representing the exhaust gas back pressure is received from a high-resolution exhaust gas back pressure sensor (2) arranged in the exhaust gas discharge adjacent to the outlet valve, wherein the sampling rate is in the range of 0.5 kHz to 3000 kHz, and the exhaust gas back pressure is extracted from the sensor signal at the predetermined time; and
calculating (32) the residual gas quantity at the predetermined time as a function of the obtained exhaust gas back pressure.

2. The method according to the preceding claim, wherein the residual gas quantity is further dependent on a state parameter of the internal combustion engine.

3. The method according to any one of the preceding claims, wherein the residual gas quantity is further dependent on a design parameter of the internal combustion engine.

4. A controller for determining a residual gas quantity in a cylinder (1) of an internal combustion engine, wherein the controller comprises an exhaust gas back pressure sensor (2) or can be connected to an exhaust gas back pressure sensor (2), which is designed to output a sensor signal with a high temporal sampling rate and representing the exhaust gas back pressure and which is arranged in the exhaust gas discharge adjacent to the outlet valve, wherein the sampling rate is in the range of 0.5 kHz to 3000 kHz, and wherein the controller is designed to carry out a method for determining a residual gas quantity in a cylinder (1) according to any of the preceding claims.

5. A motor vehicle comprising an internal combustion engine, which comprises a cylinder (1), an inlet valve (12), via which the cylinder (1) is connected to an air supply (13), and an outlet valve (14), via which the cylinder (1) is connected to an exhaust gas discharge, and comprising a controller (2) for determining a residual gas quantity in the cylinder (1) of the internal combustion engine according to the preceding claim.

## Revendications

1. Procédé permettant la détermination d'une quantité de gaz résiduel dans un cylindre (1) d'un moteur à combustion interne, le cylindre (1) étant relié à une alimentation en air (13) par l'intermédiaire d'une soupape d'admission (12) et à une évacuation de gaz d'échappement (15) par l'intermédiaire d'une soupape d'échappement (14), comprenant :
l'obtention (31) d'une contrepression des gaz d'échappement à un moment prédéterminé pendant un cycle de travail du moteur à combustion interne auquel la soupape d'admission (12) est partiellement ouverte et la soupape d'échappement (14) est partiellement ouverte, un signal de capteur comportant un taux d'échantillonnage temporel élevé et représentant la contrepression des gaz d'échappement étant reçu par un capteur de contrepression des gaz d'échappement à haute résolution (2) disposé adjacent à la soupape d'échappement dans l'évacuation de gaz, le taux d'échantillonnage se trouvant dans la plage de 0,5 kHz à 3 000 kHz et la contrepression des gaz d'échappement étant extraite du signal de capteur au moment prédéterminé ; et
calcul (32) de la quantité de gaz résiduel au moment prédéterminé en fonction de la contrepression des gaz d'échappement obtenue.

2. Procédé selon la revendication précédente, dans lequel la quantité de gaz résiduel dépend en outre d'un paramètre d'état du moteur à combustion interne.

3. Procédé selon l'une quelconque des revendications précédentes, dans lequel la quantité de gaz résiduel dépend en outre d'un paramètre de construction du moteur à combustion interne.

4. Dispositif de commande permettant la détermination d'une quantité de gaz résiduel dans un cylindre (1) d'un moteur à combustion interne, le dispositif de commande comprenant un capteur de contrepression des gaz d'échappement (2) ou pouvant être relié à un capteur de contrepression des gaz d'échappement (2), lequel est configuré pour émettre un signal de capteur comportant un taux d'échantillonnage temporel élevé et représentant la contrepression des gaz d'échappement, et est disposé adjacent à la soupape d'échappement dans l'évacuation de gaz d'échappement, le taux d'échantillonnage se trouvant dans la plage de 0,5 kHz à 3 000 kHz et le dispositif de commande étant adapté pour exécuter un procédé permettant la détermination d'une quantité de gaz résiduel dans un cylindre (1) selon l'une des revendications précédentes.

5. Véhicule automobile comportant un moteur à combustion interne comprenant un cylindre (1), une soupape d'admission (12) par l'intermédiaire de laquelle le cylindre (1) est relié à une alimentation en air (13) et une soupape d'échappement (14) par l'intermédiaire de laquelle le cylindre (1) est relié à une évacuation de gaz d'échappement, et comportant un dispositif de commande (2) permettant la détermination d'une quantité de gaz résiduel dans le cylindre (1) du moteur à combustion interne selon la revendication précédente.
